# EUROPÄISCHE PATENTSCHRIFT

(11) **EP 1 092 132 B1**
(45) Veröffentlichungstag und Bekanntmachung des Hinweises auf die Patenterteilung: **28.04.2004**
(21) Anmeldenummer: 99934548.1
(22) Anmeldetag: 30.06.1999
(51) Int. Cl.: G01G 11/00

(54) **KETTENFÖRDERER**
CHAIN CONVEYOR
TRANSPORTEUR A CHAINE

(30) Priorität: 30.06.1998 DE 19829036
(43) Veröffentlichungstag der Anmeldung: 18.04.2001
(73) Patentinhaber: Pfister GmbH, 86165 Augsburg (DE)
(72) Erfinder: HÄFNER, Hans, Wilhelm, D-86551 Aichach (DE)
(74) Vertreter: Fiener, Josef
(86) Internationale Anmeldenummer: PCT/EP1999/004514
(87) Internationale Veröffentlichungsnummer: WO 2000/000795

(56) Entgegenhaltungen:
- AU-B- 567 729
- DE-A- 4 226 188
- DE-A- 4 230 368
- DE-A- 19 536 871
- NL-A- 7 905 223

## Beschreibung

Die Erfindung betrifft einen Kettenförderer mit den oberbegrifflichen Merkmalen des Patentanspruches 1.

Derartige Kettenförderer, wie z.B. beschrieben in NL-A-7 905 223, werden insbesondere zur Förderung von Schüttgut verwendet. In den vergangenen Jahren wurden derartige Kettenförderer auch zunehmend in der Grundstoffindustrie (z. B. bei der Kohlegewinnung oder Zementherstellung) zum Dosieren oder der Förderstärkenerfassung von Schüttgütern eingesetzt, da sie einen verschleißfesten Aufbau bei hohen Durchsätzen aufgrund großer Abzugskräfte ermöglichen. Zudem ist der Kettenförderer relativ preiswert in der Herstellung und der Wartung, sowie problemlos zu montieren, so daß sich dieser aufgrund des robusten Aufbaus auch für abrasive, grobkörnige oder klebrige Schüttgüter als Bunkerabzugsorgan eignet, wie in der ZKG (Zement-Kalk-Gips) Nr. 7/1993, S. 380 beschrieben ist.

Nachteilig bei dem üblichen Aufbau des Kettenförderers ist jedoch, daß die Dosiergenauigkeit relativ gering ist, da die volumetrische Füllung aufgrund unterschiedlichen Dichten sehr ungleichmäßig sein kann und zudem bei der Entleerung Fördergut an der die Mitnehmerstege verbindenden Förderkette anhaften kann. Hierdurch können sich beträchtliche Abweichungen hinsichtlich der Dosiergenauigkeit ergeben, die insbesondere für Zuschlagstoff-Mischungen wichtig ist.

Es sind zwar bereits Waagen in Verbindung mit Bandförderern oder auch Plattenbandförderern bekannt, z. B. gemäß der DE 195 36 871 oder der DE 42 30 368, wobei das Förderband oder das Plattenband über eine ortsfeste Waagbrücke verläuft. Diese Förderer haben jedoch Nachteile hinsichtlich Verschleißverhalten oder dem erforderlichen Energiebedarf, da einerseits Förderbänder aus Gummimaterialien, auch in verstärkter Ausführung einem hohen Verschleiß unterliegen, während andererseits Plattenbänder aufgrund der Relativbewegung zwischen den einzelnen Gelenken eine hohe Reibung aufweisen, insbesondere bei hoher Belastung.

Demzufolge liegt der Erfindung die Aufgabe zugrunde, die Dosiergenauigkeit von Kettenförderern bei einfacher Bauweise zu verbessern.

Diese Aufgabe wird gelöst durch einen Kettenförderer gemäß den Merkmalen des Patentanspruches 1.

Durch die Abstützung wenigstens eines Teilbereiches einer Meßstrecke, insbesondere einer Meßbrücke, auf mindestens einer Kraftmeßvorrichtung ergibt sich eine exakte gravimetrische Kontrolle der vom Kettenförderer transportierten Gutmenge. Hierdurch lassen sich Unregelmäßigkeiten, wie sie durch unterschiedliche Füllung bei der volumetrischen Dosierung unvermeidlich sind, sicher ausschließen und damit auch anhaftendes Material an Förderketten und dgl. erkennen, sowie dementsprechend in Art einer Dosierwaage mit regelbarem Antrieb die Soll-Dosiermenge exakt einhalten. Durch die definierte Führung der Förderkette im Bereich der Meßstrecke lassen sich Störkräfte, z. B. beim Klemmen von körnigem Material zwischen den Mitnehmern und der Meßbrücke weitgehend eliminieren, so daß die Meßstrecke selbst in aus der Technischen Mechanik bekannten, "freigeschnittenen" Weise weitgehend frei von äußeren Kräften ist, auch bei sehr hohen Kettenzugkräften. Durch die Führung der Förderkette im Bereich der Meßstrecke entsteht somit eine in sich geschlossene Systemeinheit, wobei die Förderkette sicher niedergehalten wird. Dies kann in einfacher Weise durch eine leichte Dachform der Meßbrücke unterstützt werden, so daß eine vorbestimmte Vorlast an der im Zugtrum angeordneten Meßstrecke anliegt, die ein Abheben der Förderkette auch bei nachlassender oder variierender Kettenspannung sicher vermeidet. Damit werden Probleme mit ungleicher Förderung, wie diese bei der Anordnung im zugkraftfreien Leertrum auftreten können, ebenfalls sicher vermieden.

Eine besonders einfache Ausführung des vorgeschlagenen Kettenförderers ergibt sich dadurch, daß die Meßbrücke des Kettenförderers an einer definierten, bevorzugt mittig in der Kettenumlaufebene angeordneten Achse schwenkbar angeordnet ist und die Gewichts- bzw. Kraftmeßvorrichtung im Abstand hierzu angeordnet ist. Diese Anordnung eignet sich insbesondere zum Nachrüsten bestehender Kettenförderer im Zugtrum mit Führung der Förderkette auf der Meßstrecke, da durch einfache Befestigung von die Achse bildenden Bolzen oder sonstigen Lagern eine Nachrüstung des Kettenförderers, z. B. auch von Trogketten-Fördergeräten mit der gravimetrischen Kraftmeßvorrichtung möglich ist.

Gleiches gilt für die bewegliche Lagerung nur eines Teiles der Meßbrücke, die über flexible Zwischenelemente entkoppelt gelagert ist. Durch Zwischenschaltung flexibler Zwischenelemente, insbesondere von Verbundgummi-Stahlleisten oder Materialschwächungen in Art eines Filmscharniers und Abstützung auf die Meßvorrichtung läßt sich somit eine einfache Nachrüstung bestehender Kettenförderer erreichen.

Von besonderem Vorteil ist die Ausführung mit zwei Meßbrücken, wobei eine zweite Tara-Meßbrücke vor der Einlaß- bzw. Bunkerabzugsöffnung und nach der Auslaßöffnung angeordnet ist, so daß durch Differenzbildung die tatsächliche Austragsmenge an der Auslaßöffnung festgestellt und damit eine Taramessung vorgenommen werden kann. Auch die Anordnung zweier Brückenteile, die über ein Gestänge miteinander verbunden sind und in Art eines Wägebalkens nur auf eine einzige Kraftmeßvorrichtung wirken, ist zur Erfassung des Ketten-und Mitnehmergewichtes in einfacher Weise möglich.

Weitere vorteilhafte Ausgestaltungen ergeben sich aus der nachfolgenden Beschreibung von in der Zeichnung dargestellten Ausführungsbeispielen. Hierbei zeigen:
- Fig. 1: eine Kettenförderer-Waage in Seitenansicht;
- Fig. 2: einen Ausschnitt der Kettenförderer-Waage gemäß Fig. 1 in vergrößerter Seitenansicht im Bereich der Meßstrecke;
- Fig. 3: eine Querschnittdarstellung des Seitenbereichs des Kettenförderers im Meßstreckenbereich entlang der Schnittlinie III in Fig. 2; und
- Fig. 4: einen Ausschnitt des Meßstreckenbereichs des Kettenförderers in Draufsicht.

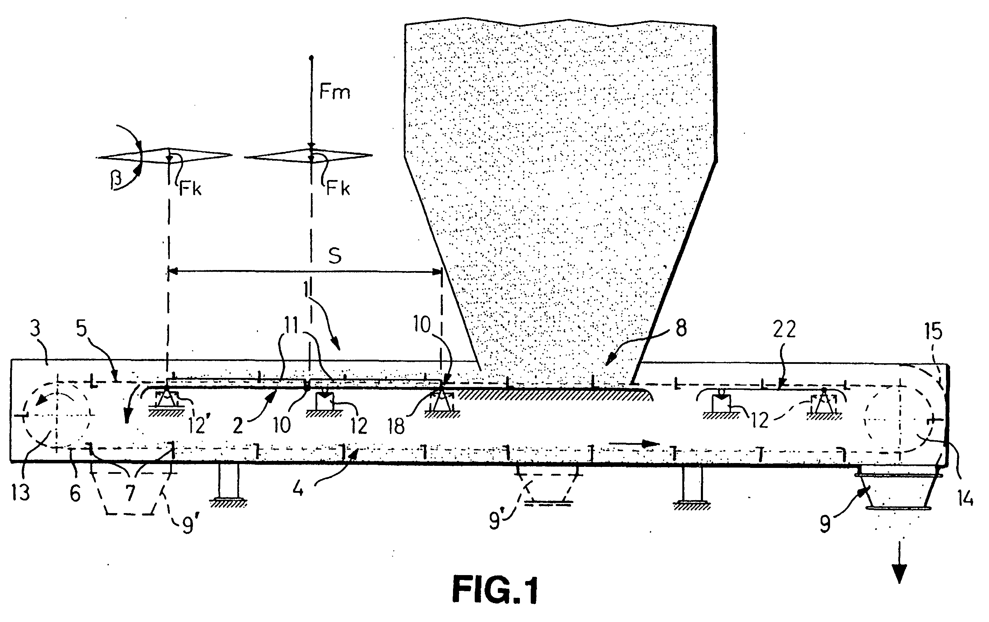

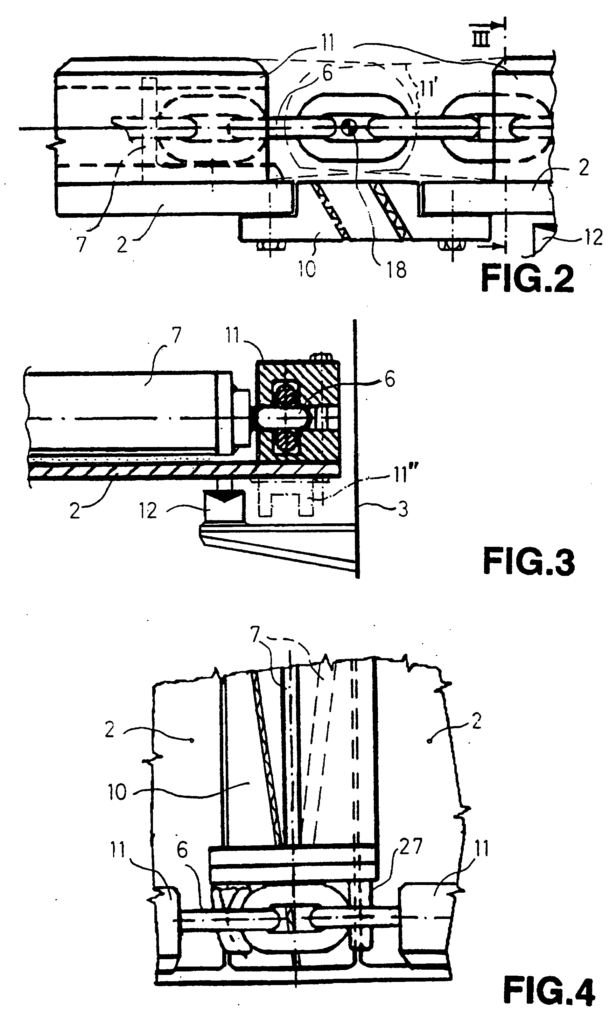

In Fig. 1 und 2 ist in Seitenansicht bzw. dazugehöriger Vergrößerung im Meßbereich ein Kettenförderer 1 in einem Gehäuse bzw. Trog 3 dargestellt, der eine geradlinig verlaufende Meßstrecke S, nachfolgend auch als Meßbrücke 2 bezeichnet, aufweist, die an dem Obertrum 5 angeordnet ist. Entlang der Meßbrücke 2 in dem Gehäuse/Trog 3 läuft eine Förderkette 6 um, die in gleichmäßigen Abständen Mitnehmerstege 7 aufweist. Durch die Mitnehmerstege 7 wird Schüttgut, das von einer Öffnung 8 (hier einem Bunker oder Silo) aus in das Gehäuse 3 eintritt, entlang der Meßbrücke 2 im Obertrum 5 und dann entlang dem Untertrum 4 im Uhrzeigersinn zu einer Auslaßöffnung 9 , transportiert, wie dies hier mit Pfeilen angedeutet ist. Zwischen der Einlaß-/Befüllöffnung 8 und der Auslaßöffnung 9 ist hierbei die plattenartige Meßbrücke 2 mittels flexibler Zwischenelemente 10 beweglich bzw. geringfügig nachgiebig gelagert bzw. in Vertikalrichtung entkoppelt und hierbei auf eine wenigstens unterhalb der Meßbrücke 2 angeordnete Kraftmeßvorrichtung 12, insbesondere eine etwa mittig angeordnete Wägezelle abgestützt. Benachbart zum linken Ende der Meßbrücke 2 ist ein Antrieb 13 in Form eines Kettenrades vorgesehen, das in die Förderkette 6 eingreift.

Nach der Förderung entlang der Meßstrecke S bzw. Meßbrücke 2 gelangt das Fördergut (hier punktiert angedeutet) im Vorkopfabwurf vor dem Antrieb 13 nach unten auf eine verschleißfeste Bodenplatte im Bereich des Untertrums 4 und schließlich unter Horizontalförderung mit der Förderkette 6 und den leistenförmigen Mitnehmern 7 an die Auslaßöffnung 9, wo es unter Wirkung der Schwerkraft herausfallen kann oder auch ausgeblasen werden kann. Es sei darauf hingewiesen, daß eine derartige, nicht dargestellte Ausblasleitung, insbesondere bei druckdichter oder staubdichter Ausführung des Kettenförderers, im Gehäuse 3 angeordnet sein kann, wobei auf die Kraftmeßvorrichtung 12 keine Störmomente ausgeübt werden. Zudem kann damit eine Reinigung der Kettenglieder und/oder der Mitnehmer 7 erfolgen, was durch eine hin-und herlaufende Bürste od. dgl. unterstützt werden kann.

Von Bedeutung ist auch die Führung entlang des hier rechten Gehäusebogens 15, da hierbei das nicht abgeworfene Schüttgut für eine Tarawägung auf eine zweite Meßbrücke 22 (ebenfalls mit einer Kraftmeßvorrichtung 12) zurückgeführt werden kann. Als Kraftmeßvorrichtung 12 für die Meßbrücke 2, 22 können beliebige Kraftmeßvorrichtungen wie Scherkraftgeber oder Wägezellen auf induktiver, kapazitiver oder piezoelektrischer Basis Verwendung finden. Bevorzugt wird hierbei eine praktisch weglos messende Kraftmeßvorrichtung 12, insbesondere eine DMS-Wägezelle verwendet, da sich hierdurch der Knickwinkel der Meßbrücke 2 auf wenige Winkelminuten begrenzen läßt, so daß die Umlaufbewegung der Förderkette 6 praktisch nicht behindert wird.

Durch die flexiblen Zwischenelemente 10 wird somit eine Schwenkachse 18 (vgl. auch Fig. 2) ausgebildet, um die sich die Meßbrückenteile in Art einer Schwinge oder einer Knickbrücke mit den geradlinigen Schenkeln geringfügig verschwenken können. Dabei sind diese Schenkel der Meßstrecke S in unbelasteter Stellung bevorzugt geringfügig dachförmig angestellt bzw. polygonartig überhöht oder "bombiert", wie dies mit dem Winkel β zur Verdeutlichung in übertriebener Weise dargestellt ist. Dadurch wird die Förderkette 6 "kraftschlüssig" sicher am Abheben von der Meßstrecke S gehindert und es ergibt sich die nach unten gerichtete Vorlast oder Kettenkraft Fk, die zusammen mit der Schüttgut-Gewichtskraft Fm die Wägezelle 12 beaufschlagt (vgl. Kräfteparallelogramm). Die Kettenkraft Fk tritt dabei in gleicher Größe an dem hier linken Abwurfende der Meßstrecke S auf und kann dort von einer zweiten Wägezelle 12' gemessen werden, so daß durch Subtraktion dieses Wertes Fk von dem Wert an der Kraftmeßvorrichtung 12 (=Fm +Fk) das effektive, über die Meßstrecke transportierte Gewicht des Fördergutes (=Fm) erfaßt werden kann. Die Kraftmeßvorrichtung 12 bzw. 12' leitet die Meßwerte an einen Rechner weiter, der hieraus zusammen mit Geschwindigkeitswerten, wie z. B. von einem Tachogenerator auf dem Antrieb 13 gewonnen werden, durch Produktbildung die momentane Durchflußmenge berechnet. Dieser Istwert wird für Dosierzwecke bevorzugt mit einem vorgewählten Sollwert verglichen und bei Abweichungen auf an sich bekannte Weise der regelbare Antrieb 13 nachgeregelt.

In Fig. 3 ist der seitliche Bereich des Kettenförderers 1 dargestellt, wobei im Querschnitt die Ausführung der auch in Fig. 1 und 2 gezeigten Führungselemente 11 zur "formschlüssigen" Halterung der Förderkette 6 auf der Meßstrecke S ersichtlich ist. Wesentlich ist hierbei, daß die leistenförmigen, geschlitzten Führungselemente 11 auf der Meßbrücke 2 angeordnet sind, so daß ggf. auftretende übermäßige Kettenkräfte nicht in das Meßergebnis einfließen bzw. eliminiert werden. Die Förderkette 6 ist somit exakt in den kreuzförmig geschlitzten Führungselementen 11 beidseitig geführt, wobei die Mitnehmerstege 7 mittels an sich bekannter, gabelförmiger Steckmitnehmer 27 (vgl. Fig. 4) in die hochkant stehenden Kettenglieder eingesteckt ist.

Auf die seitliche Führungsfunktion der Führungselemente 11 kann dabei auch verzichtet werden, so daß die Förderkette 6 beispielsweise nach oben hin durch eine glatte Leiste am Abheben von der Meßstrecke S gehindert werden kann, während die Unterseite der Förderkette 6 auf einer PTFE-Leiste auf der Meßbrücke 2 umlaufen kann. Zur Führung und Abstützung der Förderkette 6 auf der Meßstrecke S können dabei auch Rollen oder Räder vorgesehen sein, wie dies in Fig. 3 in Strichpunktlinien angedeutet ist.

Die Meßbrücke 2 kann auch einstückig ausgebildet sein, wobei sie sich dann nach kurzen Aus- und Ablaufzonen an ihren Endbereichen (auf die Förderrichtung bezogen) auf vier Wägezellen 12' abstützt, wie dies in Strichlinien in Fig. 1 angedeutet ist, und der zum Bunker hin liegende Teil der Meßbrücke 2 mit zumindest einem flexiblen Zwischenelement 10 beweglich gelagert ist. Auch bei dieser Ausführung mit vier Kraftmeßvorrichtungen 12 kann sich die Meßbrücke 2 bei Entlangförderung des Schüttgutes unter der Last des Fördergutes geringfügig nach unten bewegen und hierbei die beiden Kraftmeßvorrichtungen 12 in Art einer Wägebrücke beaufschlagt. Nach Passieren der die Meßstrecke S bildenden Meßbrücke 2 gelangt das Fördergut schließlich an die Auslaßöffnung 9 und fällt dort zwischen den Mitnehmerstegen 7 heraus nach unten.

Wie in Fig. 1 in Strichlinien angedeutet, kann die Auslaßöffnung 9' auch unterhalb der Befüllöffnung 8 oder in Nähe des Antriebes 13 angeordnet sein. Die auf die Auslaßöffnung 9 folgende zweite Meßbrücke 22 kann ebenfalls auf zwei Kraftmeßvorrichtungen 12 abgestützt ist bzw. entkoppelt an Zwischenelementen 10 gelagert ist. Hierdurch läßt sich das Totgewicht der Förderkette 6 mit Mitnehmern 7 erfassen, so daß durch Vergleich der beiden Meßwerte der Meßbrücken 2 und 22 die an der Auslaßöffnung 9 tatsächlich austretende Fördergutmenge durch Differenzbildung festgestellt werden kann. Sollten somit an den Mitnehmerstegen 7 oder der Förderkette 6 Fördergutteilchen haften bleiben, wird somit nur die effektiv den Kettenförderer 1 verlassende Schüttgutmenge erfaßt. Durch diese Taramessung ist eine beträchtliche Erhöhung der Meß- und Dosiergenauigkeit möglich. Es sei darauf hingewiesen, daß die zweite Meßbrücke 22 je nach Lage der Auslaßöffnung 9 auch im Untertrum 4 angeordnet sein kann, so daß der Durchhang der Förderkette 6 und damit die Belastung der Kraftmeßvorrichtungen 12 jeweils gleich ist und somit vom Meßergebnis eliminiert werden kann.

Wie oben dargestellt, handelt es sich bei der Abknickbewegung der Meßbrücke 2 nur um einen Knickwinkel (β) von wenigen Winkelminuten oder Winkelsekunden, so daß die Umlaufbewegung der Förderkette 6 nicht behindert wird. Als flexibles Zwischenelement 10 kann auch ein schwenkbares Lager mit seitlichen Laschen 11' zwischen den Führungselementen 11 vorgesehen sein, wie in Fig 2 in Strichlinien angedeutet. Die somit zur Ermöglichung der Schwenkbarkeit der Meßbrücke 2 gebildete Achse 18 (vgl. Fig 2) verläuft dabei bevorzugt in der Kettenumlaufebene über der Meßbrücke 2. Darunter ist die Kraftmeßvorrichtung 12 versetzt angeordenet, so daß hierbei ein definierter Hebelarm von der Achse 18 erreicht wird. Anstatt der Laschen/Bolzen können auch andere reibungsarme Lagerungen zur Bildung der Achse 18 vorgesehen sein, wobei die Förderkette 6 auch selbst ein Schwenkgelenk in deren Umlaufebene bilden kann, da der Abstand zwischen den Führungselementen 11 bevorzugt etwa zwei oder drei Kettenglieder beträgt.

Es sei darauf hingewiesen, daß die Meßwerte der Kraftmeßvorrichtung(-en) 12 einer an sich bekannten Auswerteelektronik mit Rechner zur Berechnung der Momentan-Förderstärke aus Meßbrückenbelastung und Fördergeschwindigkeit zugeführt werden und dort mit eingestellten Sollwerten verglichen werden. Durch Beschleunigung oder Abbremsen des Antriebes 13 des Kettenförderers 1, beispielsweise mit elektronischer Drehzahlregelung, kann somit die gewünschte Förder- oder Dosiermenge (Förderstärke oder Förderleistung) exakt eingehalten werden, selbst bei relativ schwierig zu fördernden Gütern, wie Klinker oder auch Klärschlämme.

## Patentansprüche

1. Kettenförderer zum gravimetrischen Messen/Dosieren, insbesondere von Schüttgütern, mit einem Gehäuse/Trog, in dem wenigstens eine Förderkette mit daran befestigten Mitnehmern umläuft, sowie einer Einlaß-/Befüllöffnung und einer Auslaßöffnung in dem Gehäuse/Trog, wobei zwischen der Einlaß-/Befüll- und Auslaßöffnung wenigstens eine Meßstrecke angeordnet ist und auf mindestens einer Kraftmeßvorrichtung abgestützt ist,
**dadurch gekennzeichnet, daß**
die Förderkette (6) entlang der Meßstrecke (S), insbesondere einer Meßbrücke (2), an daran befestigten Führungselementen (11) form- und/oder kraftschlüssig auf der Meßstrecke (S) geführt ist.

2. Kettenförderer nach Anspruch 1,
**dadurch gekennzeichnet, daß**
die Meßbrücke (2) an einer Achse (18) schwenkbar gelagert ist und die Kraftmeßvorrichtung (12) im Abstand hierzu angeordnet ist.

3. Kettenförderer nach Anspruch 2,
**dadurch gekennzeichnet, daß**
die Achse (18) etwa mittig zwischen zwei Meßbrückenteilen (2) in Kettenumlaufebene verläuft.

4. Kettenförderer nach Anspruch 2 oder 3,
**dadurch gekennzeichnet, daß**
die Kraftmeßvorrichtung (12) am von der Achse (18) entferntesten Punkt des Meßbrückenteils (2) angeordnet ist.

5. Kettenförderer nach einem der Ansprüche 2 bis 4,
**dadurch gekennzeichnet, daß**
die Kraftmeßvorrichtung (12) etwa mittig unter der Meßbrücke (2) angeordnet ist.

6. Kettenförderer nach Anspruch 1,
**dadurch gekennzeichnet, daß**
ein Meßbrückenteil (2) gegenüber dem übrigen Teil der Meßstrecke (S) mit wenigstens einem flexiblen Zwischenelement (10) entkoppelt angeordnet ist.

7. Kettenförderer nach einem der Ansprüche 1 bis 6,
**dadurch gekennzeichnet, daß**
die Meßbrücke (2) am Obertrum (5) angeordnet ist.

8. Kettenförderer nach einem der Ansprüche 1 bis 6,
**dadurch gekennzeichnet, daß**
die Meßbrücke (2), insbesondere zur Tara-Wägung am Untertrum (4) angeordnet ist.

9. Kettenförderer nach einem der Ansprüche 1 bis 8,
**dadurch gekennzeichnet, daß**
die gesamte Meßbrücke (2) auf wenigstens drei Kraftmeßvorrichtungen (12) abgestützt ist.

10. Kettenförderer nach einem der Ansprüche 1 bis 9,
**dadurch gekennzeichnet, daß**
nach der Auslaßöffnung (9) bzw. einem rückfördernden Gehäusebogen (15) eine zweite Meßbrücke (22) auf wenigstens einer weiteren Kraftmeßvorrichtung (12) abgestützt ist und die Kraftmeßvorrichtungen (12) der beiden Meßbrücken (2; 22) zur Differenzbildung der Meßwerte miteinander verbunden oder gekoppelt sind.

11. Kettenförderer nach einem der Ansprüche 6 bis 10,
**dadurch gekennzeichnet, daß**
das erste und das zweite Meßbrückenteil (2, 22) auf eine einzige, gemeinsame Kraftmeßvorrichtung (12) abgestützt sind.

12. Kettenförderer nach einem der Ansprüche 1 bis 11,
**dadurch gekennzeichnet, daß**
die seitlichen Führungselemente (11) im Querschnitt kreuzförmig ausgebildet sind.

13. Kettenförderer nach einem der Ansprüche 1 bis 12,
**dadurch gekennzeichnet, daß**
die Führungselemente (11) durch Rollen oder Räder (11'') zur Abstützung der Förderkette (6) gebildet sind.

14. Kettenförderer nach einem der Ansprüche 2 bis 13,
**dadurch gekennzeichnet, daß**
die Führungselemente (11) im Bereich der Achse (18) mittels Laschen (11') in Vertikalrichtung schwenkbar verbunden sind.

15. Kettenförderer nach einem der Ansprüche 1 bis 14,
**dadurch gekennzeichnet, daß**
die Kraftmeßvorrichtung (12) mit einem Rechner gekoppelt ist, in dem aus den Gewichtsmeßwerten der Kraftmeßvorrichtung (12) und der Fördergeschwindigkeit, die von einer Geschwindigkeitsmeßvorrichtung, insbesondere am Antrieb (13) erfaßt wird, das Produkt zur Erfassung des momentanen Fördergut-Durchflusses gebildet wird und insbesondere zur Dosierung der Rechner einen Vergleicher zum Vergleich des momentanen Fördergut-Durchflusses mit einem Sollwert und einen Regler zur Ansteuerung des Antriebs (13) umfaßt.

16. Kettenförderer nach einem der Ansprüche 1 bis 15,
**dadurch gekennzeichnet, daß**
die Mitnehmer (7) zwischen den Förderketten (6) pfeilförmig verlaufend ausgebildet sind, insbesondere an den Führungselementen (11) zur Verschleißminderung in einem Minimalabstand über die Meßbrücke (2) geführt sind.

17. Kettenförderer nach einem der Ansprüche 1 bis 16,
**dadurch gekennzeichnet, daß**
für die Mitnehmerstege (7) und/oder die Förderketten (6) eine in Förderrichtung mitlaufende Reinigungseinrichtung vorgesehen ist.

18. Kettenförderer nach einem der Ansprüche 1 bis 17,
**dadurch gekennzeichnet, daß**
die Meßbrücke (2) geringfügig bombiert bzw. dachförmig ausgebildet ist und die Kraftmeßvorrichtung(-en) (12) zur Erfassung der Kettenkräfte (Fk) der Förderketten (6) ausgebildet ist/sind.

19. Kettenförderer nach einem der Ansprüche 1 bis 18,
**dadurch gekennzeichnet, daß**
die Meßbrücke (2) im direkten Anschluß an die Einlaßöffnung (8), insbesondere als Bunkerabzugsvorrichtung angeordnet ist.

20. Kettenförderer nach einem der Ansprüche 16 bis 19,
**dadurch gekennzeichnet, daß**
die Mitten der Mitnehmer (7) in Förderrichtung nacheilend sind und das Fördergut zur Mitte hin zentrieren, insbesondere in Verbindung mit einem rückfördernden Umlenkbereich (15).

## Claims

1. A chain conveyor for gravimetric measuring/metering, especially of bulk materials, with a housing/trough, in which there circulates at least one conveyor chain with entraining members fixed thereon, as well as an inlet/filling opening and an outlet opening in the housing/trough, wherein at least one measuring segment is arranged between the inlet/filling opening and the outlet opening and is supported on at least one force measuring device,
**characterized in that**
along the measuring segment (S) the conveyor chain (6) is guided positively and/or non-positively on the measuring segment (S), especially of a measuring bridge (2) on guide elements (11) fixed thereto.

2. A chain conveyor according to claim 1, **characterized in that** the measuring bridge (2) is pivotally mounted about an axis (18) and the force measuring device (12) is spaced therefrom.

3. A chain conveyor according to claim 2, **characterized in that** the axis (18) runs approximately centrally between two measuring bridge parts (2) in the plane of circulation of the chain.

4. A chain conveyor according to claim 2 or 3, **characterized in that** the force measuring device (12) is arranged at the point of the measuring bridge part (2) furthest from the axis (18).

5. A chain conveyor according to any of claims 2 to 4, **characterized in that** the force measuring device (12) is arranged approximately centrally below the measuring bridge (2).

6. A chain conveyor according to claim 1, **characterized in that** a measuring bridge part (2) is decoupled relative to the remaining part of the measuring segment (S) by at least one flexible intermediate element (10).

7. A chain conveyor according to any of claims 1 to 6, **characterized in that** the measuring bridge (2) is arranged on the upper run (5).

8. A chain conveyor according to any of claims 1 to 6, **characterized in that** the measuring bridge (2) is arranged on the lower run (4), especially for tare weighing.

9. A chain conveyor according to any of claims 1 to 8, **characterized in that** the whole measuring bridge (2) is supported on at least three force measuring devices (12).

10. A chain conveyor according to any of claims 1 to 9, **characterized in that** a second measuring bridge (22) is supported on at least one further force measuring device (12) following the outlet opening (9) or a return housing curve (15) and the force measuring devices (12) of the two measuring bridges (2; 22) are connected or coupled to one another for forming the difference of the measured values.

11. A chain conveyor according to any of claims 6 to 10, **characterized in that** the first and second measuring bridge parts (2, 22) are supported on a single, common force measuring device (12).

12. A chain conveyor according to any of claims 1 to 11, **characterized in that** the lateral guide elements (11) are cross-shaped in cross-section.

13. A chain conveyor according to any of claims 1 to 12, **characterized in that** the guide elements (11) are formed by rollers or wheels (11") for supporting the conveyor chain (6).

14. A chain conveyor according to any of claims 2 to 13, **characterized in that** the guide elements (11) are pivotally connected in the vertical direction in the region of the axis (18) by means of link plates (11').

15. A chain conveyor according to any of claims 1 to 14, **characterized in that** the force measuring device (12) is coupled to a computer, in which, in order to determine the instantaneous conveyed material throughput, the product is formed from the weight values of the force measuring device (12) and the conveyor speed, which is detected by a speed measuring device, especially at the drive (13), and especially for metering, the computer comprises a comparator for comparing the instantaneous conveyed material throughput with a set-point value and a controller for controlling the drive (13).

16. A chain conveyor according to any of claims 1 to 15, **characterized in that** the entraining members (7) have an arrow formation between the conveyor chains (6), and are guided especially on the guide elements (11) a minimum distance above the measuring bridge (2), in order to reduce wear.

17. A chain conveyor according to any of claims 1 to 16, **characterized in that** a cleaning device circulating in the feed direction is provided for the entraining bars (7) and/or the conveyor chains (6).

18. A chain conveyor according to any of claims 1 to 17, **characterized in that** the measuring bridge (2) is slightly cambered or peaked and the force measuring device(s) (12) is/are arranged to detect the chain forces (Fk) of the conveyor chains (6).

19. A chain conveyor according to any of claims 1 to 18, **characterized in that** the measuring bridge (2) is arranged directly adjoining the inlet opening (8), in particular as a hopper abstraction device.

20. A chain conveyor according to any of claims 16 to 19, **characterized in that** the middles of the entraining members (7) trail in the feed direction and centre the conveyed material towards the middle, especially in conjunction with a return diverting region (15).

## Revendications

1. Transporteur à chaîne pour la mesure/dosage gravimétrique en particulier de produits en vrac, avec un carter/auge, dans le ou laquelle circule au moins une chaîne de transport munie d'organes d'entraînement fixés sur elle, ainsi qu'une ouverture d'introduction/ remplissage et une ouverture d'évacuation ménagée dans le carter/auge, où, entre l'ouverture d'admission/remplissage et l'ouverture de sortie, au moins une section de mesure est disposée et soutenue sur au moins un dispositif dynamométrique
**caractérisé en ce que** la chaîne de mesure (6) est guidée le long de la section de mesure (S), en particulier d'un pont de mesure (2), par une liaison à ajustement de forme et/ou à interaction de forces, sur la section de mesure (S), sur des éléments de guidage (11) fixés sur le pont de mesure (2).

2. Transporteur à chaîne selon la revendication 1, **caractérisé en ce que** le pont de mesure (2) est monté à pivotement sur un axe (18) et le dispositif dynamométrique (12) est disposé à distance de celui-ci.

3. Transporteur à chaîne selon la revendication 2, **caractérisé en ce que** l'axe (18) s'étend à peu près centralement entre deux parties de pont de mesure (2), dans le plan de circulation de la chaîne.

4. Transporteur à chaîne selon la revendication 2 ou 3, **caractérisé en ce que** le dispositif dynamométrique (12) est disposé sur le point de la partie de pont de mesure (2) qui est le plus éloigné de l'axe (18).

5. Transporteur à chaîne selon l'une des revendications 2 à 4, **caractérisé en ce que** le dispositif dynamométrique (12) est disposé à peu près centralement au-dessous du pont de mesure (2).

6. Transporteur à chaîne selon la revendication 1, **caractérisé en ce qu'**une partie de pont de mesure (2) est disposée de façon désaccouplée par rapport à la partie restante de la section de mesure (S), à l'aide d'au moins un élément intermédiaire (10) flexible.

7. Transporteur à chaîne selon l'une des revendications 1 à 6, **caractérisé en ce que** le pont de mesure (2) est disposé sur le brin supérieur (5).

8. Transporteur à chaîne selon l'une des revendications 1 à 6, **caractérisé en ce que** pont de mesure (2) est disposé sur le brin inférieur (4), en particulier pour procéder à la pesée de tarage.

9. Transporteur à chaîne selon l'une des revendications 1 à 8, **caractérisé en ce que** l'ensemble du pont de mesure (2) prend appui sur au moins trois dispositifs dynamométriques (12).

10. Transporteur à chaîne selon l'une des revendications 1 à 9, **caractérisé en ce que**, après l'ouverture d'évacuation (9) respectivement un coude de carter (15) assurant un transport de retour, un deuxième pont de mesure (22) prend appui sur au moins un autre dispositif dynamométrique (12), et les dispositifs dynamométriques (12) des deux ponts de mesure (2 ; 22) sont reliés ou couplés ensemble, pour former la différence des valeurs de mesure.

11. Transporteur à chaîne selon l'une des revendications 6 à 10, **caractérisé en ce que** la première et la deuxième partie de pont de mesure (2 ; 22) sont soutenues sur un dispositif dynamométrique (12) commun, unique.

12. Transporteur à chaîne selon l'une des revendications 1 à 11, **caractérisé en ce que** les éléments de guidage (11) latéral ont une section transversale en forme de croix.

13. Transporteur à chaîne selon l'une des revendications 1 à 12, **caractérisé en ce que** les éléments de guidage (11) sont formés par des rouleaux ou des roues (11"), pour soutenir la chaîne de transport (6).

14. Transporteur à chaîne selon l'une des revendications 2 à 13, **caractérisé en ce que** les éléments de guidage (11) sont reliés à pivotement en direction verticale, dans la zone de l'axe (18), au moyen de pattes (11').

15. Transporteur à chaîne selon l'une des revendications 1 à 14, **caractérisé en ce que** le dispositif dynamométrique (12) est couplé à un calculateur, dans lequel à partir des valeurs de poids mesurées, venant du dispositif dynamométrique (12), et à partir de la vitesse de transport, appréhendée par un dispositif de mesure de vitesse, en particulier sur l'entraînement (13), le résultat mathématique est formé pour détecter le flux instantané de produit à transporter et, en particulier, pour effectuer le dosage, le calculateur comprend un comparateur, pour comparer le débit instantané de produit à transporter à une valeur de consigne, et comprend un régulateur pour commander l'entraînement (13).

16. Transporteur à chaîne selon l'une des revendications 1 à 15, **caractérisé en ce que** les organes d'entraînement (7) montés entre les chaînes de transport (6) sont réalisés avec une allure en forme de flèche, en particulier sont guidés sur les éléments de guidage (11), avec un espacement minimal au-dessus du pont de mesure (2), dans le but de diminuer l'usure.

17. Transporteur à chaîne selon l'une des revendications 1 à 16, **caractérisé en ce qu'**un dispositif de nettoyage, circulant conjointement dans la direction de transport, est prévu pour les barrettes d'organes d'entraînement (7) et/ou les chaînes de transport (6).

18. Transporteur à chaîne selon l'une des revendications 1 à 17, **caractérisé en ce que** le pont de mesure (2) est légèrement bombé ou en forme de toit et le ou les dispositifs dynamométriques (12) est/sont réalisé(s) pour mesurer les efforts de chaîne (sK) des chaînes de transport (6).

19. Transporteur à chaîne selon l'une des revendications 1 à 18, **caractérisé en ce que** le pont de mesure (2) est disposé en raccordement direct à l'ouverture d'admission (8), en particulier en tant que dispositif d'extraction d'un silo ou d'une trémie.

20. Transporteur à chaîne selon l'une des revendications 16 à 19, **caractérisé en ce que** les centres des organes d'entraînement (7) sont situés à l'arrière dans la direction de transport et ont comme effet de centrer le produit à transporter, en particulier en liaison avec une zone de renvoi (15) assurant un transport de retour.
